# EUROPÄISCHE PATENTANMELDUNG

(11) **EP 2 924 419 A2**
(43) Veröffentlichungstag der Anmeldung: **30.09.2015**
(21) Anmeldenummer: 15152445.1
(22) Anmeldetag: 26.01.2015
(51) Int. Cl.: G01N 21/90

(54) **Inspektionsvorrichtung und Inspektionsverfahren zur Durchlichtinspektion von Behältern**

(30) Priorität: 25.03.2014 DE 102014104078
(71) Anmelder: Krones AG, 93073 Neutraubling (DE)
(72) Erfinder: Lindner, Peter, 93073 Neutraubling (DE)
(74) Vertreter: Grünecker Patent- und Rechtsanwälte PartG mbB

(57) **Zusammenfassung**

Inspektionsvorrichtung (1) zur Durchlichtinspektion von Behältern (2) mit einer Förderstrecke (3) zur Förderung der Behälter, und mit zwei Aufnahmeeinheiten (4, 5), die jeweils eine Kamera (41, 51), ein Spiegelkabinett (42, 52) und einen dazu an der Förderstrecke (3) gegenüberliegend angeordneten, eine Lichtaustrittsscheibe (43a, 53a) aufweisenden Leuchtschirm (43, 53) umfassen, dadurch gekennzeichnet, dass die Lichtaustrittsscheiben (43a, 53a) der beiden Leuchtschirme (43, 53) im Wesentlichen parallel zur Förderstrecke (3) verlaufend und quer zur Förderrichtung (R) gegenüberliegend angeordnet sind, und dass die Lichtaustrittsscheiben (43a, 53a) zwischen einem diffus streuenden und einem transparenten Zustand elektrisch umschaltbar ausgebildet sind.

## Beschreibung

Die Erfindung betrifft eine Inspektionsvorrichtung und ein Inspektionsverfahren zur Durchlichtinspektion von Behältern mit den Merkmalen der Oberbegriffe von Anspruch 1 bzw. 8.

In Getränkeabfüllanlagen werden derartige Inspektionsvorrichtung eingesetzt, um vor dem befüllen beschädigte oder unsaubere Flaschen zu erkennen und auszuscheiden.

Beispielsweise ist eine derartige Inspektionsvorrichtung zur Durchlichtinspektion von Behältern aus der EP 0 663 069 B1 bekannt. Hierbei wird der Behälter mit einer ersten Aufnahmeeinheit im Durchlichtverfahren durchleuchtet und aus mehreren Richtungen gleichzeitig mittels eines Spiegelkabinetts und einer Kamera aufgenommen. Dabei werden im Wesentlichen die zwei gegenüberliegenden Behälterseiten mit einer Aufnahme im Durchlicht inspiziert. Anschließend wird der Behälter zwischen 2 Riemen weitertransportiert und dabei um 90° gedreht. Mit der nachfolgenden zweiten Aufnahmeeinheit werden die Behälter so gedreht noch einmal durchleuchtet, um die verbleibenden Bereiche zwischen den zuvor genannten Behälterseiten zuverlässig zu inspizieren.

Bei derartigen Inspektionsvorrichtungen kann es gelegentlich vorkommen, dass Schmutzpartikel auf der kammerabgewandten Seite des Behälters nicht zuverlässig erkannt werden können. Zur Lösung dieses Problems ist weiterhin bekannt, dass zwei weitere Aufnahmeeinheiten jeweils zu einer zuvor genannten Aufnahmeeinheit versetzt und um 180° gedreht an der Förderstrecke angebracht ist. Dadurch können die vier Quadranten jeweils mit Blickrichtung der Kamera auf die Außenseite des Behälters inspiziert werden.

Nachteilig bei derartigen Inspektionsvorrichtungen ist, dass die Aufnahmeeinheiten entlang der Förderstrecke einen hohen Platzbedarf erfordern.

Weiterhin ist aus der DE 10 2012 100 987 B3 eine Inspektionsvorrichtung für bereits befüllte und verschlossene Behälter bekannt, mit der im Auflichtverfahren die Etiketten und im Durchlichtverfahren der Füllstand oder der korrekte Sitz des Verschlusses inspiziert wird. Zum Umschalten zwischen dem Auflichtverfahren und dem Durchlichtverfahren werden hier schaltbare Glaselemente vorgeschlagen. Allerdings benötigt diese Inspektionsvorrichtung entlang der Förderstrecke ebenfalls einen hohen Platzbedarf.

Aufgabe der vorliegenden Erfindung ist es daher, eine Inspektionsvorrichtung zur Durchlichtinspektion von Behältern bereitzustellen, die entlang der Förderstrecke besonders kompakt aufgebaut ist.

Diese Aufgabe wird bei einer Inspektionsvorrichtung zur Durchlichtinspektion von Behältern mit den Merkmalen des Oberbegriffs von Anspruch 1 mit den Merkmalen des kennzeichnenden Teils gelöst, gemäß dem die Lichtaustrittsscheiben der beiden Leuchtschirme im Wesentlichen parallel zur Förderstrecke verlaufend und quer zur Förderrichtung gegenüberliegend angeordnet sind und dass die Lichtaustrittsscheiben zwischen einem diffus streuenden und einem transparenten Zustand elektrisch umschaltbar ausgebildet sind.

Dadurch, dass die Lichtaustrittsscheiben der beiden Leuchtschirme im Wesentlichen parallel zur Förderstrecke verlaufen und quer zur Förderrichtung gegenüberliegend angeordnet sind, müssen die beiden Aufnahmeeinheiten nicht mehr versetzt zueinander entlang der Förderstrecke angeordnet werden sondern liegen einander direkt gegenüber. Dadurch kann der Bauraum entlang der Förderstrecke etwa um die Hälfte verkürzt werden. Da die Lichtaustrittsscheiben zwischen einem diffus streuenden und einem transparenten Zustand elektrisch umschaltbar ausgebildet sind, können diese einerseits für den Leuchtschirm als diffus abstrahlende Fläche genutzt werden und andererseits als transparente Scheibe, durch die hindurch das Spiegelkabinett mehrere Seiten des Behälters in die Kamera abbilden kann.

Wird nun der Behälter mit der einen Aufnahmeeinheit durchleuchtet, so wird die Lichtaustrittsscheibe des Leuchtschirms in den diffus streuenden Zustand geschaltet und erscheint so als leuchtende Fläche hinter dem Behälter. Zusätzlich wird die Lichtaustrittsscheibe des Leuchtschirms der anderen Aufnahmeeinheit in den transparenten Zustand umgeschaltet, so dass durch diese hindurch eine Abbildung des Behälters erfolgen kann.

Um anschließend den Behälter mit der anderen Aufnahmeeinheit zu durchleuchten, werden die beiden Lichtaustrittsscheiben jeweils in den entsprechend anderen Zustand umgeschaltet. Da die Aufnahme der Kamerabilder sowie das Umschalten der Lichtaustrittsscheiben in einem äußerst kurzen Zeitraum möglich ist, können die beiden Aufnahmeeinheiten quer zur Förderrichtung gegenüberliegend angeordnet sein und sind damit entlang der Förderstrecke besonders kompakt ausgebildet.

Die Inspektionsvorrichtung kann in einer Behälterherstellungs- und/oder Getränkeverarbeitungsanlage angeordnet sein. Die Inspektionsvorrichtung kann einer Abfüllanlage zum Abfüllen eines Produkts in die Behälter vorgeordnet sein. Die Inspektionsvorrichtung kann auch einer Streckblasmaschine für PET-Flaschen nachgeordnet sein. Die Inspektionsvorrichtung kann zwischen einer Streckblasmaschine und einer Abfüllmaschine angeordnet.

Die Behälter können dafür vorgesehen sein, Getränke, Hygieneartikel, Pasten, chemische, biologische und/oder pharmazeutische Produkte aufzunehmen. Die Behälter können Kunststoffflaschen, Glasflaschen, Dosen und/oder Tuben sein. Bei den Kunststoffbehältern kann es sich im Speziellen um PET-, HD-PE- oder PP-Behälter bzw. -Flaschen handeln.

In der Inspektionsvorrichtung können weitere Aufnahmeeinheiten der gleichen Bauart angeordnet sein, um die Behälter von weiteren Seiten zu inspizieren. Die Inspektionsvorrichtung kann eine Dreheinrichtung umfassen, die dazu ausgebildet ist, die Behälter um ihre Längsachsen mit einem vorbestimmten Winkel, beispielsweise um 90° zu drehen. Die Dreheinrichtung kann zwei Riemen umfassen, die die Behälter an den Seitenflächen aufnehmen und die mit unterschiedlicher Geschwindigkeit laufen. Die Inspektionsvorrichtung kann eine weitere Inspektionseinheit für Behälterböden, -hälse und/oder -mündungen umfassen. Dadurch können auch Verschmutzungen der Behälter in diesen Bereichen inspiziert werden.

Die Förderstrecke kann ein Förderband umfassen, um die Behälter zu fördern. Es ist auch denkbar, dass die Förderstrecke die Behälter am Behälterhals aufnimmt und fördert (Neck-Handling).

Die Kamera kann eine CCD- oder eine CMOS-Kamera sein. Denkbar ist auch, dass die Kamera als Zeilenkamera ausgebildet ist. Das Spiegelkabinett kann mehrere Spiegel umfassen, um die Behälter aus wenigstens zwei Richtungen in einem Kamerabild abzubilden. Optional kann das Spiegelkabinett dazu ausgebildet sein, die Behälter aus genau drei Richtungen in einem Kamerabild abzubilden.

Der Leuchtschirm kann optische Elemente wie Lichtleiter, Spiegel oder Linsen umfassen, um die Lichtaustrittsscheibe zu beleuchten. Der Leuchtschirm kann wenigstens eine Lichtquelle, wie beispielsweise eine Leuchtstoffröhre und/oder eine LED bzw. Blitzbogenlampe umfassen. Die optischen Elemente und die Lichtquelle können auf der Seite der Lichtaustrittsscheibe angeordnet sein, die der Förderstrecke abgewandt ist.

Dass die Lichtaustrittsscheiben parallel zur Förderstrecke verlaufen, kann hier bedeuten, dass die Lichtaustrittsscheiben im Wesentlichen parallel zu den Behälterlängsachsen und/oder zur Förderrichtung angeordnet sind. Die Förderrichtung kann die Richtung sein, entlang in der die Behälter im Betrieb mit der Förderstrecke gefördert werden.

Diffus streuender Zustand kann hier bedeuten, dass die Lichtaustrittsscheibe in diesem Zustand das Licht in verschiedenen Richtungen streut, beispielsweise wie bei einer Milchglasscheibe. Diffus streuend kann auch bedeuten, dass ein eintreffender Lichtstrahl in einen Strahlkegel gestreut wird. Transparenter Zustand kann hier bedeuten, dass die Lichtaustrittsscheibe in diesem Zustand im Wesentlichen keine Streuwirkung auf das eintreffende Licht hat.

Die Lichtaustrittsscheiben können in einem Bereich von 0 ms bis 10 ms, optional in einem Bereich von 0 ms bis 5 ms und weiterhin optional in einem Bereich von 0 ms bis 1 ms umschaltbar sein. Dadurch bewegen sich die Behälter während des Umschaltvorgangs um eine besonders kurze Strecke, wodurch der Versatz zwischen den Durchlichtaufnahmen der beiden Aufnahmeeinheiten besonders kurz ist. Dadurch ist der Bauraum entlang der Förderstrecke noch kompakter.

Die Lichtaustrittsscheiben können zur Umschaltung eine Flüssigkristallschicht oder eine PDLC-Schicht (Polymer Dispersed Liquid Crystal) umfassen. Derartige Schichten sind bereits in großer Stückzahl am Markt erhältlich und damit besonders kostengünstig.

Ein Teil eines Beleuchtungsstrahlengangs des Leuchtschirms der einen Aufnahmeeinheit kann mit einem Abbildungsstrahlengang der anderen Aufnahmeeinheit verschränkt und/oder gefaltet sein. Dadurch kann derselbe Bauraum sowohl für den Beleuchtungsstrahlengang als auch für den Abbildungsstrahlengang genutzt werden und die Aufnahmeeinheiten sind dadurch besonders kompakt ausgebildet. Verschränkt kann hier bedeuten, dass sich der Beleuchtungsstrahlengang mit dem Abbildungsstrahlengang wenigstens einmal überschneidet. Gefaltet kann hier bedeuten, dass der Beleuchtungsstrahlengang und der Abbildungsstrahlengang über die gleichen Spiegel gefaltet und damit verkürzt ist.

Der Beleuchtungsstrahlengang der einen Aufnahmeeinheit und der Abbildungsstrahlengang der anderen Aufnahmeeinheit können innerhalb des Spiegelkabinetts der anderen Aufnahmeeinheit verschränkt und/oder gefaltet sein. Dadurch kann der Bauraum im Spiegelkabinett besonders effizient genutzt werden.

Eine Lichtquelle der einen Aufnahmeeinheit kann unmittelbar neben der Kamera der anderen Aufnahmeeinheit angeordnet sein. Dadurch können die Spiegel des Spiegelkabinetts sowohl für den Leuchtschirm der einen Aufnahmeeinheit als auch für die Kamera der anderen Aufnahmeeinheit genutzt werden. Dadurch können die optischen Komponenten sowohl für den Beleuchtungsstrahlengang als auch für den Abbildungsstrahlengang gemeinsam genutzt werden und es werden somit weniger Komponenten benötigt.

Die Lichtquelle kann als Ringlicht um ein Objektiv der Kamera ausgebildet sein. Dadurch ist die Beleuchtung der Lichtaustrittsscheibe besonders gleichmäßig. Ringlicht kann hier bedeuten, dass um das Objektiv der Kamera wenigstens vier Lichtquellen in gleichmäßigem Abstand angeordnet sind. Die Lichtquellen des Ringlichts können LEDs sein. Vor jeder LED kann eine eigene Vorsatzlinse zur Lichtbündelung angeordnet sein.

Weiterhin stellt die Erfindung mit dem Anspruch 8 ein Inspektionsverfahren zur Durchlichtinspektion von Behältern bereit, wobei die Behälter mit einer Förderstrecke vor, während und/oder nach der Inspektion gefördert werden, wobei die Behälter mit zwei Aufnahmeeinheiten jeweils mit einem eine Lichtaustrittsscheibe aufweisenden Leuchtschirm durchleuchtet und mit einem an der Förderstrecke gegenüberliegend angeordnetem Spiegelkabinett und einer Kamera aufgenommen werden, dadurch gekennzeichnet, dass die Aufnahmen der beiden Aufnahmeeinheiten durch elektrisches Umschalten der beiden Lichtaustrittsscheiben zwischen einem transparenten und einem diffus streuenden Zustand aus quer zur Förderrichtung gegenüberliegenden Richtungen erfolgen.

Dadurch, dass die Aufnahmen der beiden Aufnahmeeinheiten durch elektrisches Umschalten der beiden Lichtaustrittsscheiben zwischen einem transparenten und einem diffus streuenden Zustand aus quer zur Förderrichtung gegenüberliegenden Richtungen erfolgen, können die Behälter annähern gleichzeitig inspiziert werden. Dadurch wird der Bauchraum für die Aufnahmeeinheiten entlang der Förderstrecke besonders kompakt.

Das Inspektionsverfahren kann mit einer Inspektionsvorrichtung nach wenigstens einem der Ansprüche 1-7 durchgeführt werden. Das Inspektionsverfahren kann in einer Getränkeverarbeitungsanlage durchgeführt werden, um Behälter zu inspizieren. Das Inspektionsverfahren kann für leere Behälter eingesetzt werden, um darin Fremdstoffe zu detektieren.

Die beiden Aufnahmen können quer zur Förderrichtung im Wesentlichen auf gleicher Förderhöhe erfolgen. Auf gleicher Förderhöhe kann hier bedeuten, dass ein Behälter im Betrieb zwischen den Aufnahmen der beiden Aufnahmeeinheiten um weniger als 20 mm von der Förderstrecke weitergefördert wird, optional um weniger als 10 Millimeter, weiterhin optional um weniger als 5 Millimeter. Dadurch kann der Versatz zwischen den beiden Aufnahmeeinheiten entlang der Förderstrecke besonders klein gehalten werden, wodurch der Bauraum besonders kompakt ist.

Die Lichtaustrittsscheiben können in einem Bereich von 0 ms bis 10 ms, optional in einem Bereich von 0 ms bis 5 ms und weiterhin optional in einem Bereich von 0 ms bis 1 ms umgeschaltet werden. Dadurch ist gewährleistet, dass die Behälter aus gegenüberliegenden Richtungen quer zur Förderrichtung inspiziert werden können und dass der Aufbau entlang der Förderrichtung besonders kompakt ist.

Darüber hinaus kann das Inspektionsverfahren beliebige Merkmale der zuvor beschriebenen Inspektionsvorrichtung einzeln oder in Kombination aufweisen.

Weitere Merkmale und Vorteile der Erfindung werden nachfolgend anhand der beispielhaften Figuren erläutert. Dabei zeigt
- Figur 1: eine Darstellung eines Ausführungsbeispiels der Inspektionsvorrichtung in einer Draufsicht; und
- Figur 2: die beiden Aufnahmeeinheiten der Inspektionsvorrichtung der Figur 1 in einer Detailansicht.

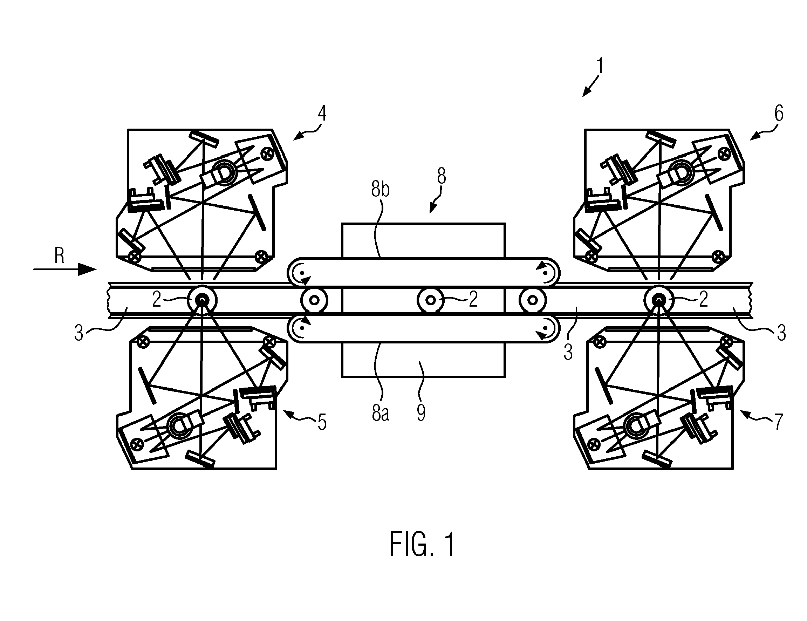

In Figur 1 ist ein Ausführungsbeispiel einer Inspektionsvorrichtung 1 in einer Draufsicht dargestellt. Zu sehen ist, dass die Behälter 2 in der Inspektionsvorrichtung 1 mittels einer Förderstrecke 3 entlang der Förderrichtung R gefördert werden. Dabei werden die Behälter 2 zwischen den beiden Aufnahmeeinheiten 4 und 5 aus Richtungen quer zur Förderrichtung durchleuchtet und entsprechende Durchlichtaufnahmen derjenigen Behälterseiten erstellt, die den beiden Aufnahmeeinheiten zugewandt sind. Anschließend werden die Behälter durch die Dreheinrichtung 8 mittels zweier Riemen 8a und 8b um 90° gedreht, wobei sie zusätzlich mit einer Bodeninspektionseinheit 9 am Behälterboden auf Fremdstoffe hin untersucht werden. Anschließend werden die Behälter 2 nach der Drehung um 90° auf der Förderstrecke 3 weiter gefördert und zwischen den beiden Aufnahmeeinheiten 6 und 7 erneut von beiden Seiten durchleuchtet. Dabei werden Bereiche der Behälter zwischen den zuvor mit den beiden Aufnahmeeinheiten 4 und 5 untersuchten Bereichen inspiziert. Die beiden Aufnahmeeinheiten 6 und 7 sind genau gleich wie die Aufnahmeeinheiten 4 und 5 aufgebaut und arbeiten mit dem selben Inspektionsverfahren.

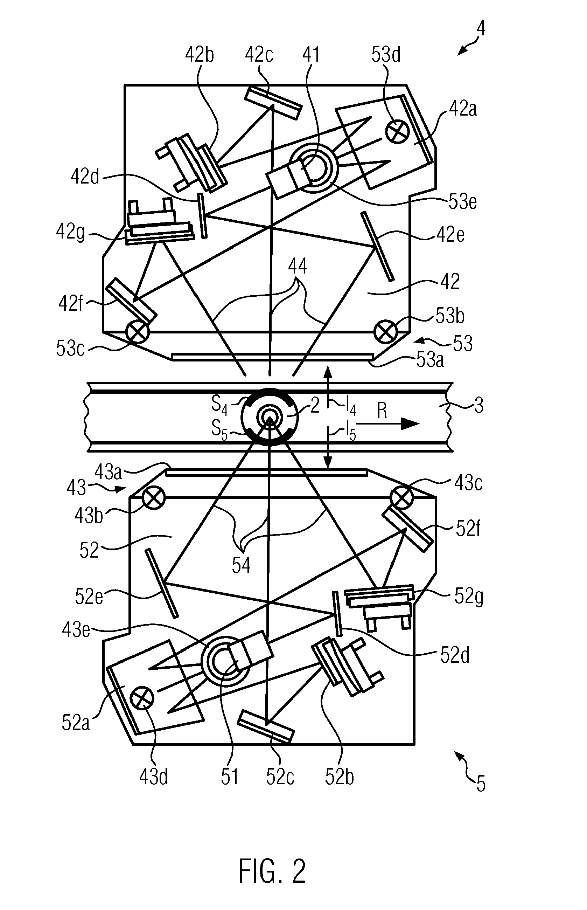

Der Aufbau der Aufnahmeeinheiten 4 und 5 wird nachfolgend anhand der Figur 2 genauer erläutert:

Zu sehen ist, dass die beiden Aufnahmeeinheiten 4 und 5 gleich aufgebaut und um 180° verdreht zueinander an der Förderstrecke 3 gegenüberliegend angeordnet sind. Denkbar ist allerdings auch, dass die beiden Aufnahmeeinheiten spiegelsymmetrisch zur Förderrichtung R aufgebaut sind.

Zu sehen ist im oberen Teil der Figur 2, dass die erste Aufnahmeeinheit 4 eine Kamera 41 und ein Spiegelkabinett 42 umfasst. Die Kamera 41 ist hier mit einem Objektiv und einem CMOS-Chip ausgebildet. Damit wird der Behälter 2 im Kamerabild scharf abgebildet.

Das Spiegelkabinett 42 teilt das Blickfeld der Kamera 41 in die Abbildungspfade 44 auf, wodurch jeweils verschiedene Teilbereiche der Behälterseite S₄ des Behälters 2 in einem Kamerabild erfasst werden. Dadurch ist gewährleistet, dass diese Teilbereiche jeweils etwa senkrecht zur Blickrichtung der Abbildungspfade 44 durchleuchtet werden. Ein erster Teilbereich der Behälterseite S₄ wird dabei über die Spiegel 42g, 42f und den Hauptspiegel 42a in die Kamera 41 abgebildet. Die Kamera 41 blickt dabei schräg von oben oder senkrecht in den Hauptspiegel 42a, der zur Umlenkung des Kamerablickfelds um eine horizontale Achse gekippt ist. Ein zweiter Teilbereich der Behälterseite S₄ wird von der Kamera 41 über die Spiegel 42c, 42b und den Hauptspiegel 42a erfasst. Ein dritter Bereich über die Spiegel 42e, 42d und den Hauptspiegel 42a. Dadurch, dass die drei Teilbereiche der Behälterseite S₄ über mehrere Spiegel abgebildet werden, ist der Abbildungsstrahlengang gefaltet und damit kompakt aufgebaut.

Weiterhin ist zu sehen, dass auf der gegenüberliegenden Seite der Förderstrecke 3 der Leuchtschirm 43 angeordnet ist. Hier ist der Beleuchtungsstrahlengang der ersten Aufnahmeeinheit 4 mit dem Abbildungsstrahlengang der zweiten Aufnahmeeinheit 5 verschränkt und gefaltet. Zur Beleuchtung sind die Lichtquellen 43b - 43e vorgesehen. Die beiden Lichtquellen 43b und 43c sind als LED-Beleuchtungsarray seitlich von der Lichtaustrittsscheibe 43a angeordnet und beleuchten diese von der Seite. Darüber hinaus ist die Lichtquelle 43d als LED mit Vorsatzlinse ausgebildet und beleuchtet die Lichtaustrittsscheibe 43a über den Hauptspiegel 52a und die weiteren Spiegel 52b - 52g des Spiegelkabinetts 52 der zweiten Aufnahmeeinheit 5. Zusätzlich ist um das Objektiv der Kamera 51 das Ringlicht 43e mit mehreren LEDs angeordnet. Das Ringlicht 43e strahlt Licht im Wesentlichen in Blickrichtung der Kamera 51 ab, das dann über die Spiegel 52a - 52g des Spiegelkabinetts 52 zur Lichtaustrittsscheibe 43a geführt wird. Durch die verschiedenen Lichtquellen 43b - 43e wird die Lichtaustrittsscheibe 43a besonders gleichmäßig beleuchtet. Allerdings ist auch denkbar, dass nur eine oder mehrere der Lichtquellen 43b - 43e zur gleichmäßigen Ausleuchtung der Lichtaustrittsscheibe 43a benötigt werden.

Mit der zweiten Aufnahmeeinheit 5 wird die zur Behälterseite S₄ gegenüberliegende Behälterseite S₅ durchleuchtet. Vor der Kamera 51 ist das Spiegelkabinett 52 mit den Spiegeln 52a - 52g angeordnet, um einzelne Teilbereich der Behälterseite S₅ mit einer möglichst senkrechten Blickrichtung zu erfassen. Dieser Aufbau entspricht dem zuvor beschriebenen Aufbau des Spiegelkabinetts 42 der ersten Aufnahmeeinheit 4.

Weiterhin umfasst die zweite Aufnahmeeinheit 5 den Leuchtschirm 53 mit der Lichtaustrittsscheibe 53a und den Lichtquellen 53b - 53e. Der Leuchtschirm 53 ist genauso aufgebaut, wie der zuvor in Bezug auf die erste Aufnahmeeinheit 4 beschriebene Leuchtschirm 43.

Demnach wird also die Seite S₄ des Behälters 2 mit dem Leuchtschirm 43 in der Richtung I₄ durchleuchtet und über das Spiegelkabinett 42 mit der Kamera 41 aufgenommen. Demgegenüber wird die Behälterseite S₅ mit dem Leuchtschirm 53 in der Richtung I₅ durchleuchtet und über das Spiegelkabinett 52 mit der Kamera 51 aufgenommen.

Damit sich nun die Aufnahmen der beiden Aufnahmeeinheiten 4 und 5 nicht gegenseitig stören, wird die Leuchtscheibe 53a bei der Aufnahme mit der Aufnahmeeinheit 4 in einen transparenten Zustand elektrisch geschaltet. Dazu ist die Leuchtscheibe 53a mit einer Flüssigkristallschicht ausgebildet. Diese kann durch An- bzw. Ablegen einer Spannung in einen diffus streuenden bzw. einen transparenten Zustand umgeschaltet werden. Im transparenten Zustand gibt die Lichtaustrittsscheibe 53a so den Blick des Spiegelkabinetts 42 und der Kamera 41 auf die Behälterseite S₄ frei. Um den Behälter 2 besonders gleichmäßig zu hinterleuchten ist die Lichtaustrittsscheibe 43a in einem diffus streuenden Zustand umgeschaltet. Hierdurch erscheint die Lichtaustrittsscheibe 43a ähnlich einer Milchglasscheibe weiß diffus streuend. Durch die Lichtquellen 43b - 43e wird die diffus streuende Lichtaustrittsscheibe 43a gleichmäßig hinterleuchtet und erscheint aus Blickrichtungen der Kamera 41 als Leuchtfläche hinter dem Behälter 2. Um die Lichtverschmutzung zu reduzieren, sind die Lichtquellen 43b - 43e als Blitzlampen ausgeführt, d.h. dass die Lichtquellen 43b - 43e im Kabinett 43 lediglich so lange Blitzen, wie die Kamera 41 belichtet. Selbiges gilt für die Kamera 51 und die Lichtquellen 53b - 53e. Dadurch können die Fremdpartikel auf der Seite S₄ des Behälters 2 besonders gut erkannt werden.

Um eine Durchlichtaufnahme mit der Aufnahmeeinheit 5 durchzuführen, werden die Lichtaustrittsscheiben 43a und 53a gleichzeitig in den jeweils anderen (komplementären) Zustand umgeschaltet. Also von diffus streuend auf transparent und umgekehrt. Danach ist die Lichtaustrittsscheibe 43a im transparenten und die Lichtaustrittsscheiben 53a im diffus streuenden Zustand. Dementsprechend kann nun die Behälterseite S₅ in der Richtung I₅ durchleuchtet und über das Spiegelkabinett 52 in die Kamera 51 abgebildet werden.

Insgesamt wird die Inspektionsvorrichtung 1 und die Aufnahmeeinheiten 4 und 5 wie folgt eingesetzt:

Die Behälter werden mit der Förderstrecke 3 während der Inspektion kontinuierlich gefördert. Befinden sich die Behälter 2 in etwa mittig zwischen den beiden Aufnahmeeinheiten 4 und 5, so wird zunächst der Behälter 2 mit der Aufnahmeeinheit 4 mittels des Leuchtschirms 43, dem Spiegelkabinett 42 und der Kamera 41 durchleuchtet. Dabei ist die Lichtaustrittsscheibe 53a im transparenten und die Lichtaustrittsscheibe 43a im diffus streuenden Zustand. Folglich wird die Behälterseite S₄ in der Richtung I₄ durchleuchtet. Anschließend werden die beiden Lichtaustrittsscheiben 42a, 53a in den jeweils anderen Zustand elektrisch umgeschaltet. Daraufhin werden die Behälter 2 mit der zweiten Aufnahmeeinheit 5 mittels des Leuchtschirms 53, dem Spiegelkabinett 52 und der Kamera 51 durchleuchtet.

Dadurch, dass die Lichtaustrittsscheiben 43a, 53a innerhalb von etwa 1 ms umgeschaltet werden können, bewegt sich der Behälter 2 zwischen den beiden Aufnahmen nur um wenige Millimeter entlang der Förderrichtung R. Dadurch können die beiden Aufnahmen quer zur Förderrichtung R im Wesentlichen auf gleicher Förderhöhe erfolgen. Bei einem entsprechenden Blickfeld ist also kein Versatz zwischen den beiden Aufnahmeeinheiten 4 und 5 notwendig und die Inspektionsvorrichtung 1 kann besonders kompakt aufgebaut werden.

Die zuvor in Bezug auf die beiden Aufnahmeeinheiten 4 und 5 beschriebenen Merkmale gelten auch für die Aufnahmeeinheiten 6 und 7 der Figur 1, die die Behälter 2 um 90° gedreht inspizieren. Dadurch können die Bereiche zwischen den Seiten S₄ und S₅ besonders gut inspiziert werden.

Darüber hinaus ist denkbar, dass die Inspektionsvorrichtung bzw. die Aufnahmeeinheit 4 - 7 mittels Polarisationsfiltern zur Folienerkennung oder weiteren Maßnahmen zur Lichtverschmutzungsvermeidung wie Richtfolien und/ oder geometrisch angepassten Scheiben ausgerüstet werden können.

Es versteht sich, dass in dem zuvor beschriebenen Ausführungsbeispiel genannte Merkmale nicht auf diese speziellen Kombinationen beschränkt sind und auch in beliebigen anderen Kombinationen möglich sind.

## Patentansprüche

1. Inspektionsvorrichtung (1) zur Durchlichtinspektion von Behältern (2) mit einer Förderstrecke (3) zur Förderung der Behälter, und
mit zwei Aufnahmeeinheiten (4, 5), die jeweils eine Kamera (41, 51), ein Spiegelkabinett (42, 52) und einen dazu an der Förderstrecke (3) gegenüberliegend angeordneten, eine Lichtaustrittsscheibe (43a, 53a) aufweisenden Leuchtschirm (43, 53) umfassen,
**dadurch gekennzeichnet, dass**
die Lichtaustrittsscheiben (43a, 53a) der beiden Leuchtschirme (43, 53) im Wesentlichen parallel zur Förderstrecke (3) verlaufend und quer zur Förderrichtung (R) gegenüberliegend angeordnet sind, und dass
die Lichtaustrittsscheiben (43a, 53a) zwischen einem diffus streuenden und einem transparenten Zustand elektrisch umschaltbar ausgebildet sind.

2. Inspektionsvorrichtung (1) nach Anspruch 1, wobei die Lichtaustrittsscheiben (43a, 53a) in einem Bereich von 0 ms bis 10 ms, optional in einem Bereich von 0 ms bis 5 ms und weiterhin optional in einem Bereich von 0 ms bis 1 ms umschaltbar sind.

3. Inspektionsvorrichtung (1) nach Anspruch 1 oder 2, wobei die Lichtaustrittsscheiben (43a, 53a) zur Umschaltung eine Flüssigkristallschicht oder eine PDLC-Schicht (Polymer Dispersed Liquid Crystal) umfasst.

4. Inspektionsvorrichtung (1) nach einem der Ansprüche 1 - 3, wobei wenigstens ein Teil eines Beleuchtungsstrahlengangs des Leuchtschirms (43) der einen Aufnahmeeinheit (4) mit einem Abbildungsstrahlengang (54) der anderen Aufnahmeeinheit (5) verschränkt und/oder gefaltet ist.

5. Inspektionsvorrichtung (1) nach Anspruch 4, wobei der Beleuchtungsstrahlengang der einen Aufnahmeeinheit (4) und der Abbildungsstrahlengang (54) der anderen Aufnahmeeinheit (5) innerhalb des Spiegelkabinetts (5) der anderen Aufnahmeeinheit (5) verschränkt und/oder gefaltet sind.

6. Inspektionsvorrichtung (1) nach Anspruch 4 oder 5, wobei eine Lichtquelle (43d, 43e) der einen Aufnahmeeinheit (4) unmittelbar neben der Kamera (51) der anderen Aufnahmeeinheit (5) angeordnet ist.

7. Inspektionsvorrichtung (1) nach Anspruch 6, wobei die Lichtquelle (43e) als Ringlicht um ein Objektiv der Kamera (51) ausgebildet ist.

8. Inspektionsverfahren zur Durchlichtinspektion von Behältern (2),
wobei die Behälter (2) mit einer Förderstrecke (3) vor, während und/oder nach der Inspektion gefördert werden,
wobei die Behälter (2) mit zwei Aufnahmeeinheiten (4, 5) jeweils mit einem eine Lichtaustrittsscheibe (43a, 53a) aufweisenden Leuchtschirm (43, 53) durchleuchtet und mit einem an der Förderstrecke (3) gegenüberliegend angeordnetem Spiegelkabinett (42, 52) und einer Kamera (41, 51) aufgenommen werden,
**dadurch gekennzeichnet, dass**
die Aufnahmen der beiden Aufnahmeeinheiten (4, 5) durch elektrisches Umschalten der beiden Lichtaustrittsscheiben (43a, 53a) zwischen einem transparenten und einem diffus streuenden Zustand aus quer zur Förderrichtung (R) gegenüberliegenden Richtungen (I₄, I₅) erfolgen.

9. Inspektionsverfahren nach Anspruch 8, wobei die beiden Aufnahmen quer zur Förderrichtung (R) im Wesentlichen auf gleicher Förderhöhe erfolgen.

10. Inspektionsverfahren nach Anspruch 8 oder 9, wobei die Lichtaustrittsscheiben (43a, 53a) in einem Bereich von 0 ms bis 10 ms, optional in einem Bereich von 0 ms bis 5 ms und weiterhin optional in einem Bereich von 0 ms bis 1 ms umgeschaltet werden.
